Europäisches Patentamt

European Patent Office

Office européen des brevets

(19)

(11) Veröffentlichungsnummer : **0 080 190**
**B1**

(12) # EUROPÄISCHE PATENTSCHRIFT

(45) Veröffentlichungstag der Patentschrift :
05.06.85

(51) Int. Cl.⁴ : **B 60 P   1/44**

(21) Anmeldenummer : **82110717.4**

(22) Anmeldetag : **19.11.82**

(54) **Hubladebühne.**

(30) Priorität : **19.11.81 DE 3145862**

(43) Veröffentlichungstag der Anmeldung :
**01.06.83 Patentblatt 83/22**

(45) Bekanntmachung des Hinweises auf die Patenterteilung : **05.06.85 Patentblatt 85/23**

(84) Benannte Vertragsstaaten :
**AT BE CH DE FR GB IT LI NL SE**

(56) Entgegenhaltungen :
**DE-A- 2 937 029
DE-U- 6 812 972
DE-U- 7 213 866
DE-U- 7 637 824
FR-A- 2 173 861**

(73) Patentinhaber : **Emil Dautel GmbH
Postfach 30 Dieselstrasse 30
D-7105 Leingarten (DE)**

(72) Erfinder : **Schwarz, Rainer
Gottfried-Keller-Strasse 16
D-6953 Gundelsheim (DE)**

(74) Vertreter : **Jeser, Jean-Pierre
Lerchenstrasse 56
D-7100 Heilbronn (DE)**

## Beschreibung

Die Erfindung betrifft eine Hubladebühne mit von deren Plattform her bedienbaren Bedienorganen und mit einer von den Bedienorganen angesteuerten Auslöseschaltung zum Auslösen der Hebe- oder der Senkbewegung der Plattform.

In Bezug auf vorhandene Bedienorgane sind diejenigen Hubladebühnen die einfachsten, bei denen nur ein Hebeorgan zum Bedienen der Hebebewegung und ein Senkorgan zum Bedienen der Senkbewegung vorliegen. Je nachdem welche Bewegungsrichtung gewählt werden soll, wird das eine oder das andere Organ bedient. Derartig einfach aufgebaute Hubladebühnen sind seit mehreren Jahren aufgrund verschärfter Sicherheitsvorschriften nicht mehr zulässig. Es gibt daher Ausführungsformen, bei denen die Bedienorgane versenkt oder anderweitig schlecht zugänglich angeordnet sind, so daß sie nicht unbeabsichtigt ausgelöst werden können. Darunter leidet jedoch die Bedienbarkeit erheblich.

Bei Hubladebühnen, die leicht zugängliche und damit bequem bedienbare Bedienorgane aufweisen und dennoch den Sicherheitsvorschriften genügen, liegen bisher immer mindestens drei Bedienorgane vor. Der einfachste Aufbau, wie er z. B. aus den Schriften DE-U-68 12 972 und DE-U-76 37 824 bekannt ist, weist ein Hebe- und ein Senkorgan sowie ein Sicherheitsorgan auf. Zum Auslösen einer Bewegung ist zunächst das Sicherheitsorgan und dann das Hebe- oder Senkorgan zu bedienen, je nachdem welche Bewegung ausgelöst werden soll.

Bei der im vorstehenden Absatz angegebenen Hubladebühne besteht die Gefahr, daß durch ein aufgebrachtes Ladegut das Sicherheitsorgan und z. B. das Hebeorgan gleichzeitig betätigt werden, wodurch die Hebebewegung unbeabsichtigt ausgelöst wird. Dieser Nachteil ist bei einer Hubladebühne gemäß der DE-OS 29 37 029 vermieden. Auch diese Hubladebühne verfügt über ein Sicherheitsorgan sowie ein Hebe- und ein Senkorgan. Die Auslösechaltung ist jedoch so beschaffen, daß eine Bewegung der Plattform nur dann ausgelöst wird, wenn von unbedienten Bedienorganen ausgehend zunächst das Sicherheitsorgan zweimal kurz hintereinander bedient wird und dann erst das entsprechende Bedienorgan bedient wird, mit dem die Hebe- oder Senkbewegung ausgelöst werden soll.

Von der Vielzahl der bekannten Ausführungsformen von Hubladebühnen mit von der Plattform her leicht zugänglich bedienbaren Bedienorganen hat sich am Markt auch eine Ausführungsform durchgesetzt, die über ein Sicherheitsorgan, ein Hilfsorgan und ein Bedienorgan zum Einstellen der Hebe- oder der Senkbewegung verfügt. Das Bedienorgan ist versenkt unterhalb der Plattformoberfläche angeordnet. Durch Aufsetzen eines Schuhabsatzes auf das Hilfsorgan wird das Bedienorgan, das als Schiebeschalter ausgeführt ist, aus der Plattformversenkung hervorgehoben, wonach es durch die Spitze des Schuhs, der mit seinem Absatz auf das Hilfsorgan aufgesetzt ist, bedienbar ist. Mit dem anderen Schuh muß dann das Sicherheitsorgan betätigt werden. Die Auslöseschaltung ist im Fall derartiger Hubladebühnen jedoch so ausgeführt, daß nur zum Auslösen der Hebebewegung die Zwei-Fuß-Bedienung erforderlich ist. Zum Auslösen der Senkbewegung genügt es, den Schiebeschalter in die Stellung « Senken » zu verschieben, ohne daß es erforderlich ist, das Sicherheitsorgan zu betätigen. Beim Wechsel von einer Bewegungsrichtung auf die andere muß jeweils von unbedienten Organen ausgegangen werden, das heißt, wenn zum Beispiel ein Fuß auf dem Sicherheitsorgan steht und der andere den Schiebeschalter zum Einstellen der Senkbewegung betätigt, genügt es nicht, daß der Schiebeschalter in Richtung zum Auslösen der Hebebewegung verschoben wird, sondern zuvor muß erst noch der zweite Fuß vom Sicherheitsorgan genommen und dann wieder auf dieses gestellt werden. Diese Bedingung liegt aus dem Grund vor, daß ein Blockieren des Sicherheitsorgans und dennoch ermöglichtes Umschalten von Heben auf Senken oder umgekehrt nicht möglich ist. Von einer derartigen Hubladebühne geht die Erfindung aus.

Der Erfindung liegt die Aufgabe zugrunde, eine Hubladebühne anzugeben, mit von deren Plattform her leicht zugänglich bedienbaren Bedienorganen, zu denen ein Hebeorgan und ein Senkorgan gehören, und mit einer von den Bedienorganen angesteuerten Auslöseschaltung, die so beschaffen ist, daß die Hebebewegung der Plattform ausgelöst wird, wenn von unbedienten Bedienorganen ausgehend das Hebeorgan bedient wird und die letzte Bedienstellung beibehalten wird und zusätzlich ein anderes Bedienorgan bedient wird, und die so beschaffen ist, daß die Senkbewegung ausgelöst wird, wenn von unbedienten Bedienorganen ausgehend mindestens das Senkorgan bedient wird, welche Hubladebühne so beschaffen sein soll, daß sie einfach und sicher von der Plattform aus bedient werden kann, daß sie aber dennoch mit weniger Bedienorganen auskommt als bisherige Hubladebühnen der vorgenannten Art.

Die Lösung der Aufgabe ist zusammenfassend im Hauptanspruch angegeben. Eine gattungsgemäße Hubladebühne ist so weitergebildet, daß ausschließlich nur das Hebe- und das Senkorgan als Bedienorgane vorhanden sind und daß die Auslöseschaltung in ganz bestimmter Art und Weise beschaffen ist. Die Art der Auslöseschaltung ist durch eine Wirkungsangabe bezeichnet. Sie soll so beschaffen sein, daß die Hebebewegung ausgelöst wird, wenn das Hebeorgan mindestens zweimal bedient wird und die letzte Bedienstellung beibehalten wird, und das Senkorgan mindestens einmal bedient wird und die letzte Bedienstellung beibehalten wird, und mindestens zwei Bedientakte innerhalb einer bestimmten Zeit, z. B. weniger Sekunden, nacheinander erfolgen, und sie soll weiterhin so beschaffen sein, daß die Senkbewegung ausgelöst wird, wenn das Senkorgan mindestens zweimal innerhalb einer bestimmten Zeit, z. B. weniger Sekunden, bedient wird. Eine derartige Wirkungsangabe entspricht einer einfachen Angaben für eine Logikschaltung, so daß ein Durchschnittsfachmann ohne weiteres in der Lage ist, eine solche Schaltung mit Logikbauelementen oder mit Relais aufzubauen.

Eine erfindungsgemäße Hubladebühne kann also unter Einhaltung der Sicherheitsvorschriften mit nur noch zwei vorhandenen Bedienorganen bedient werden. Zum Auslösen der Hebebewegung ist z. B. das Hebeorgan zweimal kurz hintereinander zu betätigen und danach im betätigten Zustand zu belassen, und anschließend ist das Senkorgan zu betätigen und in diesem Zustand zu belassen. Durch eine derartige Aufeinanderfolge der Bedienung der nur zwei vorhandenen Bedienorgane ist gewährleistet, daß zum Auslösen der Hebebewegung beide Füße in ihrer Stellung auf der Plattform festgelegt sind. Die Bedienorgane sind wie bei herkömmlichen Plattformen so weit von Quetschkanten entfernt, daß für die die Bedienorgane betätigenden Füße keine Verletzungsgefahr besteht.

Das Auslösen der Senkbewegung kann z. B. durch nur zweifaches, kurzes aufeinanderfolgendes Betätigen des Senkorgans erfolgen. Beim Auslösen dieser Bewegung ist es nicht erforderlich, auch den zweiten Fuß durch ein erforderliches Bedienen des Hebeorgans festzulegen, da beim Absenken der Hubladebühne keine Quetschgefahr besteht.

Statt nur zweifachen, kurz aufeinanderfolgenden Bedienens des einen Bedienorgans und einmaligen Bedienens des anderen Bedienorgans kann auch vorgesehen sein, daß das eine Bedienorgan z. B. dreifach oder anderweitig mehrfach bedient wird und auch das andere Bedienorgan mehrfach betätigt wird. Jeder zusätzliche Bedientakt innerhalb kurz aufeinanderfolgender Zeiten verringert die Wahrscheinlichkeit, daß eine solche Taktfolge durch zufällige Ereignisse erzielt werden kann. Der Taktabstand zumindest zwischen zwei aufeinanderfolgenden Bedientakten sollte nicht länger als einige wenige Sekunden sein, da eine derartig kurze Aufeinanderfolge von Zufallsbedienungen sehr unwahrscheinlich ist. Von Vorteil sind Taktabstände von 0,5 bis 1 Sekunde, da dies wegen der Kürze der Zeit einen hohen Schutz gegen Zufallsbedienungen bietet, und andererseits noch eine ausreichende Einfachheit der Bedienbarkeit gewährleistet. Bei Zeiten unterhalb von 0,5 Sekunden wird es recht schwierig, dasselbe Bedienorgan oder gar die beiden Bedienorgane abwechselnd hintereinander zu betätigen.

Wie bereits Ende des letzten Absatzes angedeutet, muß es nicht unbedingt erforderlich sein, daß zunächst das eine Bedienorgan mehrfach betätigt wird und dann das andere, sondern es kann auch möglich sein, die beiden Bedienorgane abwechselnd zu betätigen. Es soll ein Bedienorgan aber immer mindestens zweimal betätigt werden, also es sollen mindestens insgesamt drei Bedientakte vorliegen. Bei nur zwei erforderlichen Bedientakten wäre die Gefahr einer Zufallsbedienung zu groß, insbesondere wenn dies eine abwechselnde Bedienung der beiden Bedienorgane sein sollte. Ein solches zweimaliges Bedienen ist nur für die Senkbewegung zulässig, da hierbei keine Verletzungsgefahr an sich verringernden Lücken an Quetschkanten besteht.

Gemäß dem Hauptanspruch soll zum Auslösen der Hebebewegung z. B. das Hebeorgan zweimal und das Senkorgan einmal bedient werden. Diese Bedienweise ist besonders einprägsam, da hierbei dasjenige Bedienorgan, das er auszulösenden Bewegung zugeordnet ist, zweimal, also mit Nachdruck, betätigt wird, während das andere Bedienorgan, das als Sicherheitsorgan dient, nur einmal betätigt wird. Im Rahmen der angegebenen Lehre ist aber auch eine Auslöseschaltung zu der angegebenen völlig äquivalent, bei der das Auslösen der Hebebewegung z. B. nach zweimaligem Betätigen des Senkorgans und einmaligem Betätigen des Hebeorgans erfolgt. Dadurch ändern sich praktisch nur die Beschriftungen auf den Bedienorganen. Der Übersichtlichkeit halber ist diese völlig äquivalente Ausführungsform nicht ausdrücklich in den Hauptanspruch aufgenommen, sondern Gegenstand des letzten Anspruchs.

Auslöseschaltungen, bei denen abhängig von der Bedienfolge an zwei Eingängen an einem von zwei Ausgängen ein Signal erfolgt, sind in vielerlei Art leicht realisierbar. Daher kann eine für eine erfindungsgemäße Hubplattform erforderliche Auslöseschaltung in vielerlei Arten ausgeführt werden, ohne daß für die zu verwendende Auslöseschaltung irgendwelche Schwierigkeiten in der Konzipierung entstehen. So kann gefordert sein, daß z. B. zum Auslösen der Hebebewegung zunächst das Hebeorgan zweimal zu betätigen ist und dann erst das Senkorgan und daß die umgekehrte Betätigungsreihenfolge nicht zum Auslösen der Hebebewegung führt. Es kann aber auch vorgesehen sein, daß es gleichgültig ist, ob zunächst das Senkorgan einmal und dann das Hebeorgan zweimal kurz hintereinander betätigt wird, oder ob dies in umgekehrter Reihenfolge, wie eingangs beschrieben, erfolgt. Die Auslöseschaltung kann auch auf einfache Art und Weise so gebaut sein, daß durch sie der Hebevorgang ausgelöst wird, wenn zunächst zweimal das Hebeorgan in kurzer Reihenfolge betätigt wird, und dann durch wiederholtes Betätigen des Senkorgans der Hebevorgang schrittweise durchgeführt wird. Unter Verwendung einer solchen Schaltung ist es möglich, die Hubladebühne mit großer Genauigkeit auf die Höhe einer Laderampe einzustellen. Die Auslöseschaltung kann aber auch so aufgebaut sein, daß nach jedem Loslassen des Senkorgans zum Wiederauslösen der Hebebewegung wiederum zunächst das Hebeorgan zweimal zu betätigen ist und anschließend wieder das Senkorgan.

Die Bedienorgane können z. B. als Tippschalter ausgeführt sein, so daß zum zweimaligen Betätigen das Bedienorgan zweimal niedergetreten werden muß, und beim zweiten Mal der bedienende Fuß in der Bedienstellung bleibt. Entsprechend können Dreh-, Wipp-, Kipp- oder Schiebeschalter mehrmals kurz hintereinander jeweils in die gleiche Richtung hin betätigt werden. Die letztgenannten Bedienorgane können aber auch so ausgeführt sein, daß sie über eine Mittenstellung, und zwei von dieser unter zueinander entgegengesetzten Bewegungen erreichbare Endstellungen aufweisen, in denen jeweils ein in der Endstellung betätigter elektrischer Schalter untergebracht ist. Die Auslöseschaltung kann dann so beschaffen sein, daß sie auf zweimaliges Bedienen nur anspricht, wenn dies in zwei aufeinanderfolgenden entgegengesetzten Bedienrichtungen eines Bedienorgans erfolgt. Dies bringt ein weiteres Erhöhen der Sicherheit mit sich. Es muß nämlich nicht nur ein zweifaches Bedienen innerhalb kurzer Zeit erfolgen, sondern die beiden Bedientakte müssen auch noch in zueinander entgegengesetzten Bewegungsrichtungen durchgeführt werden. Derartige Bedingungen werden durch Zufall praktisch nie auftreten.

Die Erfindung wird im folgenden anhand von durch Figuren veranschaulichten Ausführungsbeispielen und Weiterbildungen näher erläutert. Es zeigen :

Figur 1 eine perspektivische Ansicht einer Hubladebühne mit zwei in Fahrtrichtung hintereinander auf der Plattform der Bühne angeordneten Bedienorganen ;

Figur 2 eine perspektivische Ansicht gemäß Fig. 1, jedoch mit quer zur Fahrtrichtung angeordneten Bedienorganen ;

Figur 3 einen Schaltplan einer von einem Senkschalter und einem Hebeschalter angesteuerten Auslöseschaltung mit zwei Ausgängen, unter Verwendung welcher Schaltung es unerheblich ist, ob zum Auslösen der Hebebewegung zunächst der Hebeschalter zweimal und dann der Senkschalter einmal oder zuerst der Senkschalter einmal und dann der Hebeschalter zweimal betätigt wird ;

Figur 4 einen Schaltplan gemäß Fig. 3, jedoch mit genauerer Ausführung der in Fig. 3 prinzipiell eingezeichneten Zählschaltung ;

Figur 5 eine Schaltung gemäß Fig. 3, bei der jedoch nach zweimaligem kurz aufeinanderfolgendem Betätigen eines Eingangsschalters und anschließendem zweimaligem kurz aufeinanderfolgendem Betätigen des anderen Eingangsschalters an den Ausgängen keine Spannung mehr auftritt ;

Figur 6 eine Schaltung gemäß Fig. 5, jedoch mit genauerer Ausführung der in Fig. 5 schematisch eingezeichneten Zählschaltung ;

Figur 7 einen Schaltplan gemäß Fig. 4, jedoch in einer Ausführungsform, bei der z. B. zum Auswählen der Hebebewegung zunächst der Hebeschalter zweimal kurz hintereinander zu betätigen ist, und anschließend der Senkschalter, und bei dem eine umgekehrte Bedienweise zu keiner Ausgangsspannung führt ;

Figur 8 eine Schaltung gemäß Fig. 7, jedoch in einer anderen Ausführungsform ;

Figur 9 eine Schaltung gemäß Fig. 8, jedoch in einer Relais-Ausführungsform ;

Figur 10 eine Auslöseschaltung zum Durchführen einer Hebe- oder Senkbewegung durch aufeinanderfolgendes Betätigen von Bedienorganen, die elektrische Schalter mit einer Mittenstellung und zwei Endstellungen aufweisen.

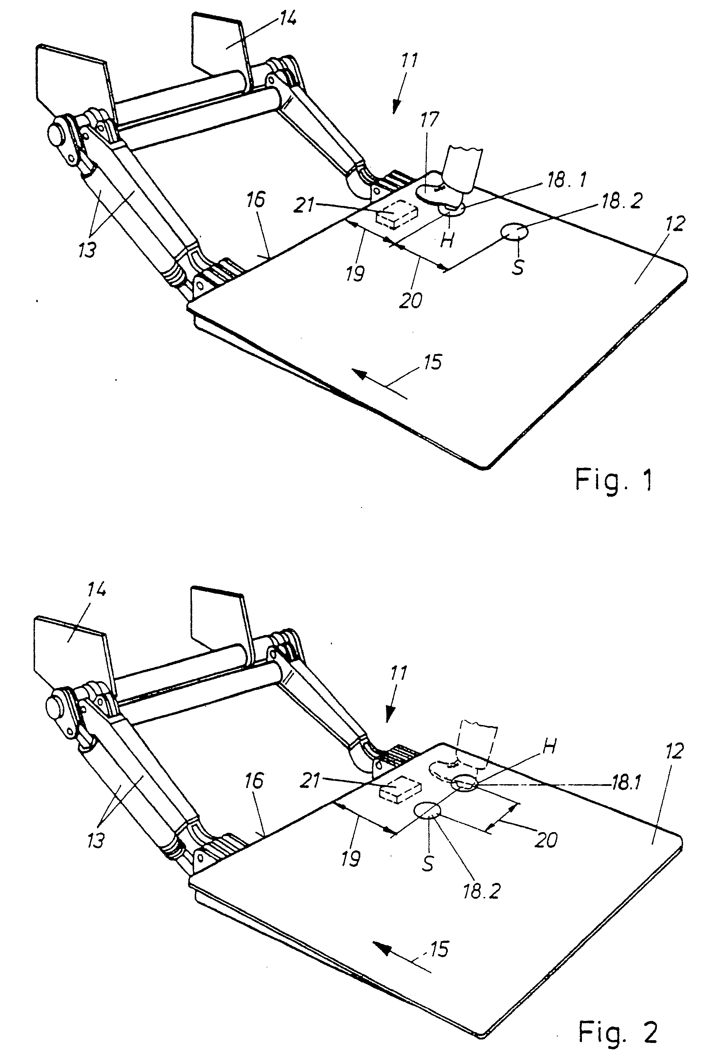

In den Fig. 1 und 2 ist perspektivisch eine Hubladebühne 11 mit einer Plattform 12 dargestellt, die über Parallellenker 13 und Befestigungsplatten 14 an einem nicht näher dargestellten Fahrzeug befestigt ist. Die in Fahrtrichtung 15 vorderste Kante der Plattform 12 kann als Quetschkante 16 wirken, wenn die Plattform 12 hochgefahren wird und sich dabei der Spalt zwischen der Quetschkante 16 und der Lastfahrzeugpritsche verringert. Um diese Verletzungsgefahr für die Füße 17 einer Bedienperson zu vermeiden, ist durch Sicherheitsvorschriften vorgeschrieben, daß beim Durchführen der Hebebewegung von der Plattform aus eine Zwei-Fuß-Bedienung erforderlich ist, und daß dabei die Bedienorgane 18 so weit von der Quetschkante 16 entfernt sind, daß für auf die Bedienorgane 18 aufgesetzte Füße 17 keine Verletzungsgefahr an der Quetschkante 16 besteht.

In der Ausführungsform gemäß den Fig. 1 und 2 sind nur zwei Bedienorgane 18 vorhanden, und zwar ein Hebeorgan 18.1 und ein Senkorgan 18.2. Diese sind üblicherweise so angeordnet, daß das Hebeorgan 18.1 von einer Bedienperson aus gesehen rechts und das Senkorgan 18.2 links liegt. In der Ausführungsform gemäß Fig. 1 liegen die beiden Bedienorgane 18 in Fahrtrichtung 15 gesehen hintereinander. Das Hebeorgan 18.1 liegt näher an der Quetschkante 16, jedoch um einen Kantenabstand 19 entfernt, der so groß ist, daß ein auf das Hebeorgan 18.1 mit dem Absatz aufgesetzter Schuh nicht bis zur Quetschkante 16 reicht. Das Senkorgan 18.2 liegt um einen Bedienorganabstand 20 entfernt hinter dem Hebeorgan 18.1, welcher Abstand so groß ist, daß ein gleichzeitiges Bedienen der Bedienorgane 18 mit einem Schuh nicht möglich ist. Bei der Ausführungsform gemäß Fig. 2 liegen beide Bedienorgane 18 um den Kantenabstand 19 von der Quetschkante 16 entfernt quer zur Fahrtrichtung auf der Plattform 12. Die beiden Bedienorgane 18 sind quer zur Fahrtrichtung um den Bedienorganabstand 20 voneinander entfernt.

Die Bedienorgane können für Tast-, Wipp-, Kipp-, Schiebe- oder Drehbewegung ausgeführt sein. Jedem Bedienorgan ist mindestens ein elektrischer Schalter mit mindestens einem Arbeitskontakt zugeordnet. Zweckmäßig ist es, die Bedienorgane als Unterflurbedienorgane auszuführen, d. h. sie im wesentlichen unterhalb der Oberfläche der Plattform 12 unterzubringen und nur mit ihren eigentlichen Bedienelementen über die Plattformebene überstehen oder in etwa mit dieser abschließen zu lassen. Die beiden Bedienorgane können auch unterschiedlich, z. B. das eine als Tipporgan und das andere als Wipporgan, ausgeführt sein, um z. B. anhand der unterschiedlichen Bedienungsweisen die Zuordnung zu den unterschiedlichen Bewegungen sinnfälliger oder besser einprägbar zu machen.

In den Fig. 1 und 2 ist nahe der Quetschkante 16 innerhalb der Plattform 12 als gestricheltes Kästchen eine Auslöseschaltung 21 eingezeichnet. Diese steht elektrisch leitend mit elektrischen Schaltern in Verbindung, die den Bedienorganen 18 zugeordnet sind. Die Ausgänge der Auslöseschaltung 21 sind mit einem Hydrauliksteuerkasten verbunden, durch den Hydraulikorgane zum Heben und zum Senken angesteuert werden.

Statt der Anordnung der Bedienorgane in Fahrtrichtung 15 oder quer zu dieser können die Bedienorgane auch schräg zu dieser angeordnet sein. Es ist aber immer darauf zu achten, daß die beiden Bedienorgane 18 den Bedienorganabstand 20 einnehmen und mindestens um einen Kantenabstand 19 von möglichen Quetschkanten entfernt sind.

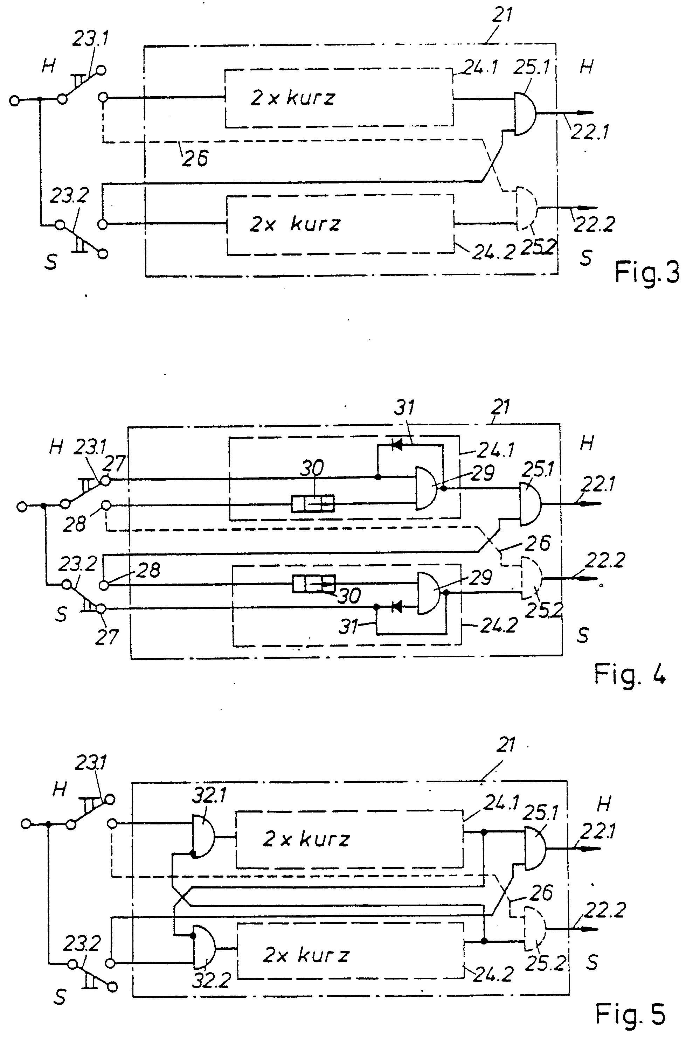

Ausführungsformen von Auslöseschaltungen 21 sind in den Fig. 3 bis 10 dargestellt. Alle Schaltungen gehen von der prinzipiellen Funktion aus, wie sie in Fig. 3 angegeben ist.

Die Logikschaltung 21 gemäß Fig. 3 verfügt über zwei Eingänge und zwei Ausgänge 22. Der obere Ausgang ist der Hebeausgang 22.1, über den der Hebevorgang der Plattform ausgelöst wird, wenn Spannung an ihm auftritt. Der untere Ausgang ist der Senkausgang 22.2, über den entsprechend der Senkvorgang ausgelöst wird, wenn Spannung an ihm auftritt. Die Funktionsweise des Hebens und des Senkens sind durch « H » und « S » angedeutet.

Innerhalb der Logikschaltung 21 der Fig. 3 sei zunächst der obere Schaltkreis betrachtet. Vom Ausgang eines Hebeschalters 23.1 gelangt bei Betätigen des Schalters Spannung in eine Hebezählschaltung 24.1. Wird der Hebeschalter 23.1 zweimal kurz hintereinander betätigt, was durch die Bezeichnung « zweimal kurz » innerhalb des Hebezählschaltungssymbols angedeutet ist, so tritt am Ausgang der Hebezählschaltung 24.1 eine Spannung auf, die dann am einen Eingang eines Hebegatters 25.1 anliegt. Der andere Eingang des Hebegatters steht mit dem Ausgang eines Senkschalters 23.1 in Verbindung. Wird dieser geschlossen, so liegen an beiden Eingängen des Hebegatters 25.1 Spannungen an, woraufhin dieses durchschaltet und eine Spannung am Hebeausgang 22.1 auftritt. Völlig entsprechend ist der untere Schaltkreis innerhalb der Logikschaltung 21 aufgebaut. Hier steht mit dem Ausgang eines Senkschalters 23.2 der Eingang einer Senkzählschaltung 24.2 in Verbindung, und mit dem Ausgang der Senkzählschaltung 24.2 steht der Eingang eines Senkgatters 25.2 in Verbindung. Der andere Eingang des Senkgatters 25.2 steht mit dem Ausgang des Hebeschalters 22.1 in Verbindung. Auch die Senkzählschaltung 24.2 ist so beschaffen, daß sie bei zweimaligem kurz aufeinanderfolgendem Betätigen des Senkschalters 23.2 durchschaltet und eine Spannung an ihrem Ausgang auftritt. Wird der Schalter jedoch nach dem zweimaligen kurzen Betätigen nicht festgehalten, fällt die Zählschaltung 24 wieder ab, und es muß erst wieder zweimal am Eingang getaktet werden, bis am Ausgang der Zählschaltung 24 eine Spannung auftritt.

Wie aus dem Vorstehenden ersichtlich ist, tritt an einem der Ausgänge 22 eine Spannung auf, wenn einer der beiden Schalter 23 zweimal kurz hintereinander betätigt und dann festgehalten wird, und dann der andere Schalter 23 ebenfalls betätigt und festgehalten wird. In Fig. 3 ist der obere Schalter als Hebeschalter 23.1 bezeichnet und mit einem « H » gekennzeichnet. Der untere Schalter ist als Senkschalter 23.2 bezeichnet und entsprechend mit einem « S » gekennzeichnet. Wird der Hebeschalter 23.1 zweimal betätigt und der Senkschalter einmal, so tritt am Hebeausgang 22.1 eine Spannung auf. Eine solche Betätigungsart ist besonders einprägsam, da in diesem Fall die Hebebewegung durch das doppelte Betätigen desjenigen Schalters ausgelöst wird, der mit « H » wie in « Heben » bezeichnet ist. Der andere Schalter dient nur als Sicherheitsschalter. Für die Einfachheit der angegebenen Hubladebühne und für die Betriebssicherheit ihrer Bedienung wäre es jedoch völlig äquivalent zu fordern, daß am Hebeausgang 22 eine Spannung auftreten soll, wenn zunächst ein mit « S » wie « Senken » bezeichneter Schalter zweimal bedient werden soll und dann der andere mit « H » wie « Heben » bezeichnete Schalter. In diesem Fall würde sich an der Hubladebühne und der ihr zugehörigen Logikschaltung nicht das geringste ändern, nur wären die Bezeichnungen H und S an den Schaltern 23 gerade umzutauschen. Im folgenden wird jedoch immer davon ausgegangen werden, daß zum Auslösen der Hebebewegung der mit H bezeichnete Hebeschalter 23.1 zweimal kurz hintereinander zu betätigen ist und der mit S bezeichnete Senkschalter 23.2 nur einmal.

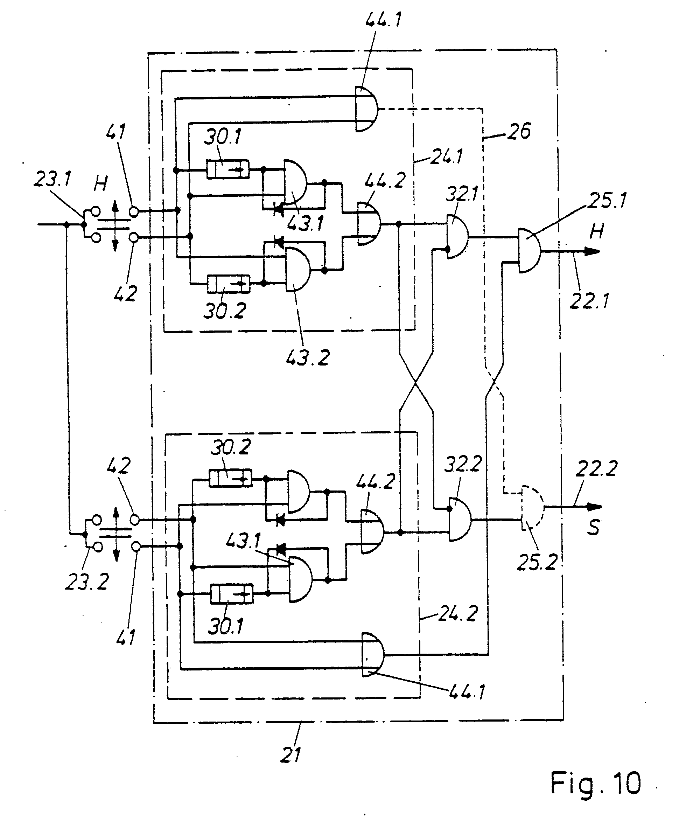

In den Fig. 3 bis 8 und in der Fig. 10 ist das Senkgatter 25.2 und eine von einem Ausgang des Hebeschalters 23.1 zu ihm führende Verbindungsleitung 26 jeweils gestrichelt eingezeichnet. Dies soll bedeuten, daß das Senkgatter 25.2 und die Verbindungsleitung 26 auch weggelassen werden können. Dies bedeutet dann, daß zum Auslösen der Senkbewegung keine Spannung mehr vom Hebeschalter 23.1 mehr zugeführt werden muß, daß also das zugehörige Hebeorgan 18.1 zum Auslösen der Senkbewegung nicht zu bedienen ist. Vielmehr ist nur das Senkorgan 18.2 zweimal kurz hintereinander zu betätigen. Beim zweimaligen kurz hintereinander Betätigen schaltet die Senkzählschaltung 24.2 durch und gibt ihre Spannung direkt an den Senkausgang 22.2 ohne Zwischenschaltung eines Senkgatters 25.2.

Alle Logikschaltungen gemäß den Fig. 3 bis 8 und 10 funktionieren bei vorhandenem Senkgatter 25.2 und vorhandener Verbindungsschaltung 26, die beide jeweils gestrichelt gezeichnet sind, so, daß zum Auslösen der Hebebewegung der Hebeschalter 23.1 zweimal kurz hintereinander und der Senkschalter 23.2 einmal zu bedienen ist, und daß zum Auslösen der Senkbewegung der Senkschalter 23.2 zweimal kurz hintereinander und der Hebeschalter 23.1 einmal zu betätigen ist. In den Ausführungsformen, bei denen das Senkgatter 25.2 und die Verbindungsleitung 26 weggelassen sind und die Ausgangsspannung der Senkzählschaltung 24.2 direkt an den Senkausgang 22.2 gegeben wird, ist zum Auslösen der Hebebewegung der Hebeschalter 23.1 zweimal kurz hintereinander zu betätigen und der Senkschalter 23.2 nur einmal. Zum Auslösen der Senkbewegung ist nur der Senkschalter 23.2 zweimal kurz hintereinander zu betätigen.

Bei allen Ausführungsformen gemäß den Fig. 3 bis 10 sind die Zählschaltungen 24 jeweils so aufgebaut, daß sie nach zweimaligem kurzem Takten durchschalten. Es können jedoch auch Zählschaltungen verwendet werden, die erst nach drei oder noch mehr Takten durchschalten. Je öfter getaktet werden muß, bevor die Zählschaltung durchschaltet, desto sicherer wird die Bedienung der Bedienorgane 18 gegenüber unbeabsichtigter, zufälliger Bedienung durch auf eine Plattform 12 aufgebrachtes Ladegut. Es können auch in die Leitungen zwischen den Ausgängen der Schalter 23 und den Eingängen der Auslösegatter 25 Zählschaltungen eingebaut sein. Dann ist z. B. zum Auslösen der Hebebewegung der Hebeschalter 23.1 mehrmals kurz hintereinander zu betätigen, und auch der Senkschalter ist mehrmals zu betätigen. Für alle Bedientakte kann gefordert sein, daß sie kurz aufeinander folgen. Wie oft die einzelnen Schalter 23 zu betätigen sind, und in welcher Reihenfolge, ob abwechselnd oder mehrmals nacheinander, ändert am Prinzip der angegebenen Hubladebühne mit nur zwei Bedienorganen und einer Auslöseschaltung nichts.

Die Schaltung gemäß Fig. 4 unterscheidet sich von der in Fig. 3 nur durch die spezielle Ausführungsform der Zählschaltungen 24. Die Hebezählschaltung 24.1 wie auch die Senkzählschaltung 24.2 sind gleich ausgeführt. Die Zählschaltungen 24 gemäß Fig. 4 stehen jeweils mit einem Ruhekontakt 27 und einem Arbeitskontakt 28 eines der Schalter 23 in Verbindung. Es wird im folgenden nur die Verbindung zwischen dem Hebeschalter 23.1 und der Hebezählschaltung 24.1 beschrieben. Der Schaltkreis für die Senkbewegung ist völlig äquivalent ausgeführt. Der Ruhekontakt 27 steht mit einem Eingang eines Zählausgangsgatters 29 in Verbindung. Dieses schaltet noch nicht durch, wenn nur an diesem einen Eingang eine Spannung anliegt, solange nicht auch an seinem anderen Eingang eine Spannung anliegt. Der andere Eingang des Zählausgangsgatters 29 ist über ein Verzögerungsglied 30 mit dem Arbeitskontakt 28 des Hebeschalters 23.1 verbunden. Das Verzögerungsglied 30 ist so beschaffen, daß es den Übergang von 0 auf 1, also den Abfall seiner Ausgangsspannung, wenn die Eingangsspannung wegfällt, verzögert. Die Verzögerungszeit im vorliegenden Fall beträgt etwa 0,5 bis 1 Sekunde.

Wird der Hebeschalter 23.1 in der Schaltung der Fig. 4 zu einem ersten Mal betätigt, legt er über seinen Arbeitskontakt 28 Spannung an das Verzögerungslied 30 und damit an den einen Eingang des Zählausgangsgatters 29. Wird die Bedienbewegung aufgehoben, erhält der Ruhekontakt 27 des Hebeschalters 23.1 Spannung und legt diese an den anderen Eingang des Zählausgangsgatters 29. Dieses schaltet dann so lange durch, wie an seinem anderen Eingang noch vom Verzögerungsglied 30 bereitgestellte Spannung anliegt. Fällt die Spannung am Verzögerungsglied 30 nach 0,5 bis 1 Sekunde ab, sperrt auch das Zählausgangsgatter 29 wieder. Aus diesem Grund muß der Hebeschalter 23.1 innerhalb 0,5 bis 1 Sekunde zum zweiten Mal betätigt werden. Dann liegt am Verzögerungsglied 30 und damit an dem zugehörigen Eingang des Zählausgangsgatters 29 wieder Spannung an. Der andere Eingang des Zählausgangsgatters 29 ist über eine Selbsthalteleitung 31 mit dem Ausgang des Zählausgangsgatters 29 verbunden, so daß dieser Eingang dauernd mit Spannung versorgt wird, solange Spannung am Ausgang des Zählausgangsgatters 29 anliegt. Wird daher der Hebeschalter 23.1 nach seinem zweiten Bedienen dauernd in Bedienstellung gehalten, erhält das Verzögerungsglied 30 und damit der zugehörige Eingang des Zählausgangsgatters 29 dauernd über den Hebeschalter 23.1 Spannung, während der andere Eingang des Zählausgangsgatters 29 Spannung über die Selbsthalteleitung 31 erhält. Somit schaltet die Hebezählschaltung 24.1 durch, wenn der Hebeschalter 23.1 zweimal innerhalb von 0,5 bis 1 Sekunde, je nach Zeitverhalten des Verzögerungsglieds 30, betätigt wird, und behält diese Spannung an ihrem Ausgang bei, solange der Hebeschalter 23.1 nach seinem zweiten Bedienen in dieser Bedienstellung gehalten wird.

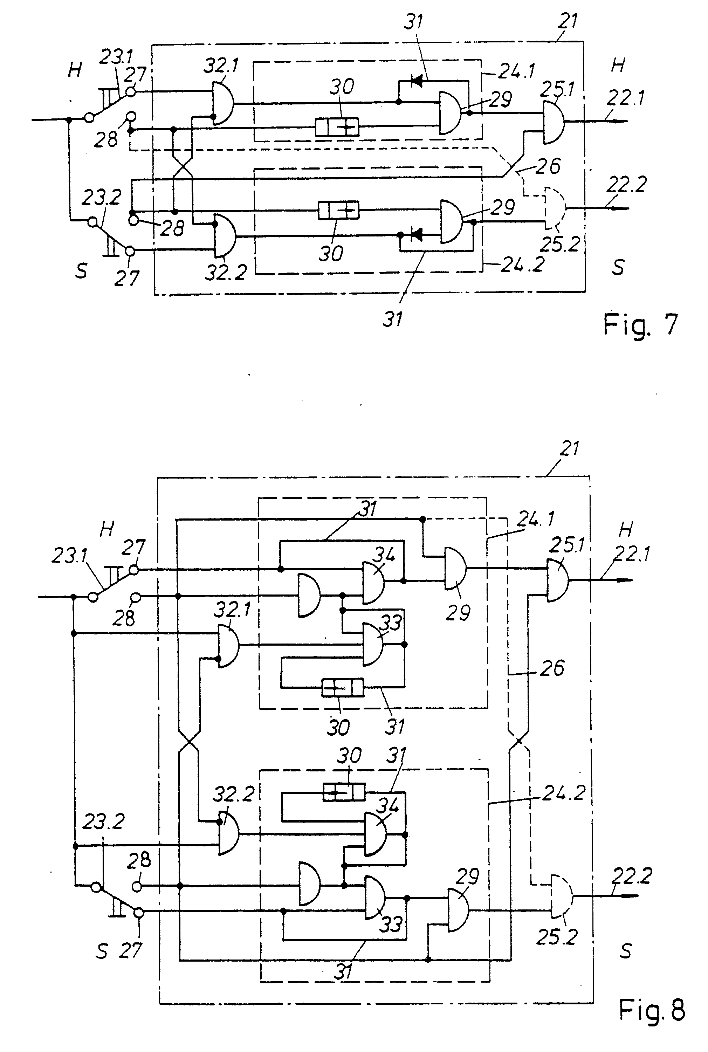

Die Schaltungen gemäß den Fig. 3 und 4 weisen einen Nachteil auf, wie er durch Schaltungen gemäß den Fig. 5 bis 10 vermieden wird. Dieser Nachteil besteht darin, daß, wenn z. B. der Hebeschalter 23.1 zweimal betätigt worden ist und dann in seiner Betätigungsstellung gehalten ist, auch noch der Senkschalter 23.2 zweimal kurz hintereinander betätigt werden kann, wodurch auch die Senkzählschaltung 24.2 durchschaltet. Dann liegen an beiden Ausgängen 22 Spannungen an. Dies ist vor allem aus folgendem Grund unangenehm. Wenn z. B. der Hebeschalter 23.1 zweimal betätigt und in seiner letzten Stellung gehalten ist, kann, was durchaus erwünscht ist, die Hebebewegung beliebig unterbrochen und wieder fortgesetzt werden, indem nur immer der Senkschalter 23.2 betätigt oder losgelassen wird. Während jeden Betätigens hebt sich die Hubladebühne, während si bei Wiederunterbrechen stehenbleibt. Bei erneutem Betätigen des Senkschalters hebt sich die Hubladebühne weiter. Wird nun aber der Senkschalter 23.2 so schnell aufeinanderfolgend bewegt, daß die ihm zugeordnete Senkzählschaltung 24.2 anspricht, wird er also bei der beschriebenen Ausführungsform z. B. zweimal innerhalb von 0,5 bis 1 Sekunde betätigt, so liegt, wie eingangs des Absatzes angegeben, auch am Senkausgang 22.2 und nicht nur am Hebeausgang 22.1 eine Spannung an.

Um diesem Nachteil zu vermeiden, ist in der Schaltung gemäß Fig. 5, ausgehend von der Schaltung gemäß Fig. 3, ein Sperrgatter 32 vor jeder Zählschaltung 24 eingefügt. Die Zählschaltungen 24 stehen nun nicht mehr direkt mit den jeweiligen Ausgängen der Schalter 23 in Verbindung, sondern es ist das Sperrgatter 32 jeweils dazwischengeschaltet. Der andere Eingang des Sperrgatters 32 ist negiert und steht mit dem Ausgang der gegennamigen Zählschaltung in Verbindung. So steht das Hebesperrgatter 32.1 am Eingang der Hebezählschaltung 24.1 mit dem Ausgang der Senkzählschaltung 24.2 in Verbindung. Der negierte Eingang an einem Sperrgatter 32 hat zur Folge, daß es durchschaltet, wenn an seinem negierten Eingang keine Spannung anliegt, und am anderen Eingang eine Spannung zugeführt wird. Wird also z. B. dem Hebesperrgatter 32.1 vom Hebeschalter 23.1 her eine Spannung zugeführt und hat die Senkzählschaltung 24.2 nicht durchgeschaltet, so schaltet das Hebesperrgatter 32.1 durch und gibt die Spannung an die Hebezählschaltung 24.1 weiter. Sowie die Hebezählschaltung 24.1 durchgeschaltet hat, gibt sie eine Spannung an den negierten Eingang des Senksperrgatters 32.2. Da nun eine Spannung am negierten Eingang des Senksperrhatters 32.2 anliegt, kann dieses nicht mehr durchschalten, auch wenn an seinem anderen Eingang eine Spannung von Senkschalter 23.2 aus angelegt wird. Es ist also nicht mehr möglich, die Senkzählschaltung 24.2 zu betätigen, wenn die Hebezählschaltung 24.1 bereits durchgeschaltet hat. Nun kann also nach zweimaligem kurz nacheinander Betätigen dieses Schalters der Senkschalter 23.2 beliebig oft und beliebig schnell nacheinander betätigt werden, ohne daß die Senkzählschaltung durchschaltet, sondern vielmehr nur mit dem Effekt, daß die Plattform der Hubladebühne in beliebig vielen und beliebig kurz aufeinanderfolgenden Schritten auf eine bestimmte Höhe gefahren werden kann.

In Fig. 6 ist eine Schaltung eingezeichnet, die praktisch eine Kombination der Schaltungen gemäß den Fig. 4 und 5 darstellt. Ausgehend von der Schaltung gemäß Fig. 3 sind bei der Schaltung gemäß Fig. 6 die Zählschaltungen 24 ausgeführt wie die Zählschaltungen in der Schaltung gemäß Fig. 4, und vor den Eingang jeder Zählschaltung ist ein mit dem Ausgang der gegennamigen Zählschaltung verbundenes Sperrgatter 32 gemäß der Schaltung in Fig. 5 angelegt.

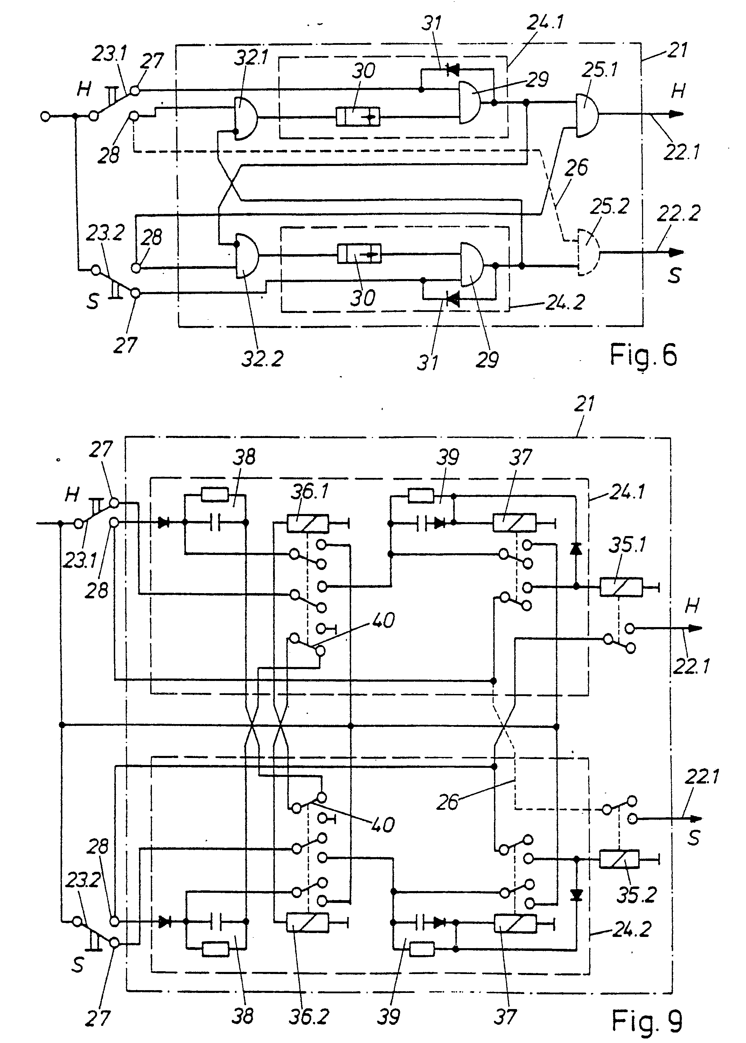

Die Schaltung gemäß Fig. 7 ist eine Weiterbildung der Schaltung gemäß Fig. 6, wobei die Zählschaltungen 24 gleich ausgeführt sind, jedoch die Sperrgatter 32 anders angeordnet sind. Bei einer Schaltung gemäß Fig. 6, wie auch bei solchen gemäß den Fig. 3 bis 4 und 10, ist es möglich, z. B. Auslösen der Hebebewegung zunächst das Hebeorgan zweimal kurz hintereinander zu bedienen und anschließend das Senkorgan. Es kann aber auch genau umgekehrt vorgegangen werden, nämlich zunächst das Senkorgan einmal und danach erst das Hebeorgan zweimal kurz hintereinander zu betätigen. Die Schaltung gemäß Fig. 7 und auch die gemäß den Fig. 8 und 9 sind dagegen so ausgeführt, daß zum Auslösen der Hebebewegung unbedingt zunächst zweimal kurz hintereinander das Hebeorgan und dann erst einmal das Senkorgan zu betätigen ist. Ein einmaliges Betätigen des Senkorgans und daran anschließendes zweimaliges kurz aufeinanderfolgendes Betätigen des Hebeorgans bleibt ohne Folge.

Bei der Schaltung gemäß Fig. 7 liegt der Ausgang des Hebesperrgatters 32.1 an demjenigen Eingang des Zählausgangsgatters 29, der mit einer Selbsthalteleitung 31 mit dem Ausgang des Zählausgangsgatters 29 verbunden ist. Der eine Eingang des Hebesperrgatters 32.1 leigt am Ruhekontakt 27 des Hebeschalters 23.1, und der negierte Eingang des Sperrgatters 32.1 ist mit dem Arbeitskontakt des Senkschalters 23.2 verbunden. Wird daher der Senkschalter 23.2 als erster Schalter betätigt, wird eine Spannung von seinem Arbeitskontakt 28 an den negierten Eingang des Hebesperrgatters 32.1 gelegt, wodurch dieses sperrend wird, und ein weiteres Betätigen der Hebezählschaltung 24.1 verhindert wird. Wird dagegen zunächst der Hebeschalter 23.1 betätigt, wird eine Spannung über das Verzögerungsglied 30 an das Zählausgangsgatter 29 gelegt, wie dies für die Schaltung gemäß Fig. 4 beschrieben ist. Wird dann der Hebeschalter 23.1 wieder losgelassen, gelangt über seinen Ruhekontakt 27 und das Sperrgatter 32 eine Spannung an den anderen Eingang des Zählausgangsgatter 29, woraufhin dieses wegen der noch anliegenden Spannung vom Verzögerungsglied 30 durchschaltet. Wird dann der Herbeschalter 23.1 wieder betätigt, bevor das Verzögerungsglied 30 abgeschaltet hat, wird der zugehörige Eingang des Zählausgangsgatters 29 wieder dauernd mit Spannung vom Arbeitskontakt 28 aus versorgt, während der andere Eingang über die Selbsthalteleitung 31 mit Spannung versorgt wird. Wird nun der Senkschalter 23.2 betätigt, so gelangt zwar wieder von seinem Arbeitskontakt 28 aus eine Spannung an den negierten Eingang des Hebesperrgatters 32.1, was jedoch völlig ohne Belang ist, da die Leitung des Zählausgangsgatters 29, die mit dem Ausgang des Hebesperrgatters 32.1 in Verbindung steht, nunmehr laufend über die Selbsthalteleitung 31 mit Spannung versorgt wird, solange nur der Hebeschalter 23.1 dauernd betätigt wird.

In Fig. 8 ist eine Schaltung dargestellt, die ihrer Funktion nach der Schaltung von Fig. 7 entspricht und die dann in einer Schaltung gemäß

Fig. 9 als Relaisschaltung ausgeführt ist. Gegenüber der Schaltung nach Fig. 7 verfügt bei der Schaltung gemäß Fig. 8 jede Zählschaltung 24 über zwei weitere Gatter, und zwar ein erstes Zählgatter 33 und ein zweites Zählgatter 34. Das erste Zählgatter verfügt über drei Eingänge, von denen einer mit dem ruhekontakt 27 des Hebeschalters 23.1 nur in einer Richtung leitend, der zweite mit einem Verzögerungsglied 30 und der dritte mit dem negierten Ausgang eines Hebesperrgatters 32.1 in Verbindung steht. Das erste Zählgatter 33 schaltet nur durch, wenn an allen seinen drei Eingängen Spannungen anliegen.

Das Hebesperrgatter 32.1 wird an seinem einen Eingang laufend mit Spannung versorgt, und an seinem negierten steht es mit dem Arbeitskontakt 28 des Senkschalters 23.2 in Verbindung. Wird der Senkschalter 23.2 nicht betätigt, so liegt am negierten Eingang des Hebesperrgatters 32.1 keine Spannung an, weswegen an seinem negierten Ausgang eine Spannung anliegt. Wird dagegen der Senkschalter 23.2 betätigt, so wird dem Hebesperrgatter 32.1 über den Arbeitskontakt 28 des Senkschalters 23.2 eine Spannung zugeführt, woraufhin sein Ausgang sperrt und das erste Zählgatter 33 an seinem den Ausgang des Hebesperrgatters 32.1 zugeordneten Eingang keine Spannung mehr erhält. Daher kann das erste Zählgatter 33 nur dann durchschalten, wenn der Senkschalter 23.2 nicht betätigt ist.

Es sei nun aber davon ausgegangen, daß der Senkschalter 23.2 nicht betätigt ist, daß also an dem Hebegatter 32.1 zugeordneten Eingang des ersten Zählgatters 33 keine Spannung anliege. Es werde nun der Hebeschalter 23.1 betätigt, worauf einer der Eingänge des ersten Zählgatters 33 sowie das Verzögerungsglied 30, das ebenfalls mit dem Arbeitskontakt 28 des Hebeschalters 23.1 verbunden ist, Spannung erhält. Über das Verzögerungsglied 30 erhält dann auch der dritte Eingang des Zählgatters 33 Spannung, woraufhin das Zählgatter durchschaltet. Das Verzögerungsglied 30 ist in eine Selbsthalteleitung 31 des ersten Zählgatters 33 geschaltet, weswegen dieses durchgeschaltet bleibt, solange das Verzögerungsglied 30 nicht abgefallen ist oder solange der Hebeschalter 23.1 betätigt wird. Wird dieser jedoch nicht mehr betätigt, so wird über seinen Ruhekontakt 27 dem zweiten Zählgatter 34 eine Spannung zugeführt. Der andere Eingang des zweiten Zählgatters 34 ist mit dem Ausgang des ersten Zählgatters 33 verbunden, das nach dem ersten Betätigen des Hebeschalters 23.1 eine Spannung abgibt. Daher schaltet das zweite Zählgatter 34 durch, sowie es über den Ruhekontakt 27 Spannung erhalt. Der Ausgang des zweiten Zählgatters 34 ist über eine Selbsthalteleitung 31 mit dem Eingang verbunden, der vom Ruhekontakt 27 Spannung erhält. Wird daher der Hebeschalter 23.1 innerhalb der kurzen Zeit wiederum betätigt, innerhalb der das Verzögerungsglied 30 noch nicht abgefalleb ist, erhält das zweite Zählgatter 34 nach dem zweiten Betätigen des Hebeschalters 23.1 über den mit dem ersten Zählgatter 33 verbundenen Eingang laufend Spannung vom Arbeitskontakt 28 des Hebeschalters 23.1, während sein zweiter Eingang laufend über die Selbsthalteleitung 31 Spannung erhält. Daher schaltet das zweite Zählgatter 34 laufend durch, solange der Hebeschalter 23.1 betätigt bleibt. Diese Spannung wird einem Zählausgangsgatter 29 zugeführt, das an seinem anderen Eingang eine Spannung über den Arbeitskontakt 28 des Hebeschalters 23.1 erhält und somit durchschaltet. Die weitere Funktionsweise entspricht völlig der von Fig. 7. Die Senkzählschaltung 24.2 ist völlig äquivalent aufgebaut und wird daher, wie schon eingangs der Figurenbeschreibung zu den Schaltungen näher erläutert, nicht mehr näher beschrieben, da in allen Figuren, die Schaltungen betreffen, die Hebezählschaltung 24.1 und die Senkzählschaltung 24.2 und insgesamt die Auslöseschaltungen 21 symmetrisch ausgeführt sind. In Zusammenhang mit der Fig. 8 soll noch erwähnt werden, daß die Sperrgatter 32 nicht unbedingt erforderlich sind, sondern daß vielmehr z. B. der Arbeitskontakt 28 des Senkschalters 23.2 direkt mit einem negierten Eingang des ersten Zählgatters 33 in der Hebezählschaltung 24.1 verbunden sein kann. Die Sperrgatter 32 sind nur eingezeichnet, um die Ähnlichkeit der Schaltung der Fig. 8 mit den Schaltungen gemäß den Fig. 5, 6 und 7 zu veranschaulichen.

In Fig. 9 ist eine Schaltung in Relaisausführung dargestellt, die ihrer Wirkungsweise nach völlig der von Fig. 8 entspricht. Es liegen wiederum ein Hebeschalter 23.1, ein Senkschalter 23.2 und eine Auslöseschaltung 21 mit einer Hebezählschaltung 24.1, einer Senkzählschaltung 24.2, einem Hebegatter und einem Senkgatter vor. Das Hebegatter ist nun aber als Heberelais 35.1 und das Senkgatter als Senkrelais 35.2 ausgeführt. In jeder der beiden Zählschaltungen 24 liegt ein erstes Zählrelais 36 und ein zweites Zählrelais 37 vor. Beide Zählrelais weisen mehrere Kontakte auf. Das erste Zählrelais 36 übernimmt die Funktion eines ersten Zählgatters 33 und eines Sperrgatters 32, und das zweite Zählrelais 37 übernimmt die Funktion eines zweiten Zählgatters 34 gemäß Fig. 8, während beide Zählrelais zusammen die Funktion eines Zählausgangsgatters 29 gemäß Fig. 8 übernehmen.

Bei der Erläuterung der Schaltung gemäß Fig. 9 wird, wie auch bei den vorhergehenden Schaltungsbeschreibungen, nur die Hebezählschaltung 24.1 und ihre Ansteuerung beschrieben. Das erste Zählrelais 36 ist ein verzögertes Relais, bei dem eine RC-Verzögerungsschaltung 38 eine Abfallzeit von 0,5 bis 1 Sekunde einstellt. Die RC-Verzögerungsschaltung 38 entspricht dem Verzögerungsglied 30 gemäß Fig. 8. Das erste Zählrelais 36 ist so mit dem Hebeschalter 23.1 verbunden, daß es haltend wird, wenn durch Betätigung des Hebeschalters 23.1 auf einen Arbeitskontakt 28 des Hebeschalters 23.1 eine Spannung gelegt wird. Wird dann der Schalter wieder losgelassen, bleibt das erste Zählrelais 36 über die RC-Verzögerungsschaltung 38 während der Abfallszeit selbsthaltend. Über das selbsthaltende erste Zählrelais 36 und einen Ruhekontakt 27 des losgelassenen Hebeschalters 23.1 wird eine Spannung an das zweite Zählrelais 37 gelegt, wodurch dieses anspricht und einen Kontakt schließt, der mit dem Arbeitskontakt 28 des Hebeschalters 23.1 verbunden ist. Das zweite Zählrelais 37 bleibt so lange erregt, wie das erste Zählrelais 36 noch nicht abgefallen ist. Wird innerhalb der Abfallszeit der Hebeschalter 23.1 zum zweiten Mal betätigt, wird über den beschriebenen geschlossenen Kontakt am zweiten Zählrelais 37 eine Spannung auf den Eingang des zweiten Zählrelais 37 gelegt, wodurch dieses selbsthaltend bleibt, solange der Hebeschalter 23.1 in seiner Betätigungsstellung gehalten wird. Über den geschlossenen Kontakt wird auch das Heberelais 35.1 angesteuert, so daß dieses erregt wird, sowie an den Arbeitskontakt 28 des Hebeschalters 23.1 Spannung gelegt wird. Durch das Erregen des Heberelais 35.1 wird sein einziger vorhandener Kontakt geschlossen, der den Arbeitskontakt 28 des Senkschalters 23.2 mit dem Hebeausgang 22.1 verbindet. Dadurch kann durch wahlweises betätigen des Senkschalters 23.2 wahlweise Spannung an den Hebeausgang 22.1 gelegt werden. Das zweite Zählrelais 37 verfügt noch über eine RC-Halteschaltung 39, die dafür sorgt, daß das zweite Zählrelais 37 nicht abfällt, während der Hebeschelter 23.1 zum zweiten Mal von seiner Ruhestellung in die Betätigungstellung bewegt wird. Es genügt hier eine RC-Halteschaltung 39 mit sehr kurzer Zeitkonstante, z. B. von einer Zehntelsekunde, da das Umschalten sehr schnell erfolgt.

Die Schaltung gemäß Fig. 9 ist so ausgeführt, daß der Hebevorgang nur dann ausgelöst werden kann, wenn zunächst der Hebeschalter 23.1 zweimal innerhalb der Zeit betätigt wird, innerhalb der das erste Zählrelais 36 noch nicht abgefallen ist, und dann bei weiterhin betätigtem Schalter 23.1 der Senkschalter 23.2 betätigt wird. Eine umgekehrte Reihenfolge, also ein zunächst einmaliges Bedienen des Senkschalters 23.2, bleibt ohne Auswirkung. Um dies zu erzielen, verfügen die ersten Zählrelais 36 über Sperrkontaktbrücken 40, die in ihrer Funktion den Sperrgattern 32 entsprechen. In der Hebezählschaltung 24.1 in der Fig. 9 ist z. B. der Ausgang der RC-Verzögerungsschaltung 38 mit der Sperrkontaktbrücke 40 am ersten Zählrelais 36 in der Senkzählschaltung 24.2 verbunden. Solange das erste Zählrelais 36 nicht betätigt ist, ist die Sperrkontaktbrücke 40 nicht geschlossen, und die RC-Verzögerungsschaltung 38 steht über die Sperrkontaktbrücke 40 des beschriebenen Relais mit dem Eingang des ersten Zählrelais 36 in der Hebezählschaltung 24.1 in Verbindung. Bei nicht betätigtem ersten Senkzählrelais 36.2 kann also die Hebezählschaltung 24.1, wie oben beschrieben, funktionieren. Hat die Hebezählschaltung 24.1 einmal durchgeschaltet, ist also das zweite Zählrelais 37 selbsthaltend geworden, so ist es unerheblich, ob das erste Hebezählrelais 36.1 noch durchschaltet oder nicht. Es kann also das erste Senkzählrelais 36.2 betätigt werden und damit die Sperrkontaktbrücke 40 zwischen der RC-Verzögerungsschaltung 38 in der Hebezählschaltung 24.1 und dem ersten Hebezählrelais 36.1 geöffnet werden, ohne daß dies noch auf die Funktion der Hebezählschaltung 24.1 nachträglich einen Einfluß haben könnte. Wird dagegen das erste Senkzählrelais 36.2 betätigt, bevor die Hebezählschaltung 24.1 durchgeschaltet hat, wird durch das Öffnen der Sperrkontaktbrücke 40 am ersten Senkzählrelais 36.2 der Stromkreis für das erste Hebezählrelais 36.1 grundsätzlich unterbrochen, so daß auch bei zweimaligem kurz nacheinanderfolgendem Betätigen des Hebeschelters 23.1 die Hebezählschaltung 24.1 nicht mehr durchschalten kann.

Die Schaltung gemäß Fig. 9 ist somit eine einfach aufgebaute Relaisschaltung, mit der z. B. der Hebevorgang nur dann ausgelöst werden kann, wenn zunächst der Hebeschalter 23.1 zweimal und dann erst der Senkschalter 23.2 betätigt wird. Relaisschaltungen sind als Schaltungen für hohe Beanspruchungen, wie sie z. B. bei Hubladebühnen vorkommen, besonders vorteilhaft.

Die Relaisschaltung gemäß Fig. 9 ist analog zu der Auslöseschaltung von Fig. 8 wirkend. Es wird nämlich z. B. bei geschlossenem Hebeschalter 23.1 das erste Zählglied der Senkzählschaltung 24.2 außer Kraft gesetzt. In baulich besonders vorteilhafter Weise kann die Schaltung gemäß Fig. 9 aber auch so abgewandelt sein, daß durch eine Spannung am Ausgang der Senkzählschaltung, also durch ein erregtes Senkrelais 35.2, die Verbindung zwischen dem ersten und dem zweiten Zählrelais unterbrochen wird. Alle sechs Relais de Schaltung sind dann mit jeweils zwei Kontaktbrücken aufgebaut. Dadurch, daß nur gleiche Relais verwendet werden, wird die Schaltung billig und die Lagerhaltung des Relais einfach. Bei einer solchen Schaltung entfällt also die Sperrkontaktbrücke 40 am ersten Zählrelais 36. Die RC-Verzögerungsschaltung 38 ist dann direkt mit dem ersten Zählrelais 36 verbunden. Dafür ist die Leitung zwischen dem ersten und dem zweiten Zählrelais 37 in der Hebezählschaltung 25.1 über eine zusätzliche Kontaktbrücke im Senkrelais 35.2 geführt, die die Leitung unterbricht, wenn das Senkrelais 35.2 erregt wird. Entsprechendes gilt für die Verbindung zwischen dem ersten und dem zweiten Zählrelais in der Senkzählschaltung 25.2.

Hubladebühnen der anmeldungsgemäßen Art verfügen über ausschließlich zwei leicht zugängliche Bedienorgane und eine Auslöseschaltung, durch die z. B. der Hebevorgang ausgelöst wird, wenn der Hebeschalter zweimal kurz nacheinander und der Senkschalter nur einmal betätigt wird. Die Forderung, daß der Hebeschalter zweimal kurz nacheinander betätigt werden muß, führt schon zu einer erheblichen Sicherheit gegen Zufallsbedienungen. Der Schutz gegen zufällige Bedienungen wird noch größer, wenn zum Auslösen der Hebebewegung unbedingt das zweimalige Bedienen des Hebeorgans vor dem einmaligen Bedienen des Senkorgans stattfinden muß und nicht auch die umgekehrte Reihenfolge von Bedienbewegungen ein Auslösen der Hebebewegung bewirken kann. Noch größere Sicherheit wird dann bewirkt, wenn nicht nur verlangt wird, daß das Hebeorgan zweimal kurz hintereinander betätigt werden muß, sondern wenn dies auch noch in zwei zueinander unterschiedlichen Richtungen, z. B. durch Hin- und Herschieben oder Hin- und Herdrehen eines Schalters erfolgen muß. In Fig. 10 ist eine Schaltung dargestellt, mit der derartige Bedingungen erfüllt werden können. Sie ist für alle Schalter 23 vorgesehen, die eine Mittenstellung und zwei von dieser unter zueinander entgegengesetzten Bewegungen erreichbare Endstellungen aufweisen.

Die Schaltung 10 ist so ausgeführt, daß z. B. zum Auslösen der Hebebewegung der Hebeschalter zweimal kurz nacheinander betätigt werden muß, wobei es unerheblich ist, ob z. B. im Fall eines Drehschalters zuerst links herum und dann rechts herum oder umgekehrt aus der Mittenstellung heraus gedreht wird und dann eine der Endstellungen eingehalten wird und bei der der Senkschalter einmal betätig werden muß und dann in seiner Betätigungsstellung gehalten werden muß, wobei es ebenfalls unerheblich ist, ob er aus seiner Mittenstellung heraus rechts herum oder links herum gedreht wird. Für Schiebe- oder Wipp- oder Kippschalter gilt statt Hin- und Herdrehen enstprechend Hin- und Herschieben oder Hin- und Herkippen. Die Schaltung gemäß Fig. 10 ist so ausgeführt, daß es unerheblich ist, ob zuerst das einmalige Bedienen des Senkschalters und dann das zweimalige kurz aufeinanderfolgende Bedienen des Hebeschalters oder eine umgekehrte Bedienreihenfolge gewählt wird. Trotz dieser hohen Variabilität der Bedienreihenfolge und der Bedienrichtung ist dennoch eine hohe Betriebssicherheit gewährleistet, da das zweimalige Bedienen des Hebeschalters unbedingt in zueinander entgegengesetzten Bewegungsrichtungen erfolgen muß, um die Hebebewegung auszulösen. Zum Auslösen der Senkbewegung gilt Entsprechendes wie hier zu der Hebebewegung ausgeführt. Soll die Senkbewegung jedoch nur durch zweimaliges kurze aufeinanderfolgendes Bedienen des Senkschalters durchgeführt werden können, so kann wieder ein noch näher zu beschreibendes Senkgatter 25.2 analog, wie es schon anhand der Schaltung von Fig. 3 beschrieben ist, weggelassen werden und der Ausgang eines Zählausgangsgatters 29 direkt mit dem Senkausgang 22.2 verbunden werden. Entsprechend könnte auch in der Schaltung gemäß Fig. 9 das Senkrelais 35.2 weggelassen werden und der das Senkrelais 35.2 ansteuernde Ausgang des zweiten Zählrelais 37 in der Senkzählschaltung 24.2 direkt nach außen geführt werden.

Bei der Schaltung gemäß Fig. 10 wird wieder nur eine von zwei Zählschaltungen 24, und zwar die oben eingezeichnete Hebezählschaltung 24.1 und ihre Ansteuerung beschrieben. In der Fig. 10 ist die Kontaktbrücke eines Hebeschalters 23.1 in Mittenstellung gezeichnet. Der Hebeschalter 23.1 verfügt über zwei Endstellungen mit einem oberen Endkontakt 41 und einem unteren Endkontakt 42. Die Hebezählschaltung 24.1 verfügt über ein oberes Verzögerungsglied 30.1, ein unteres Verzögerungsglied 30.2, ein oberes Zählgatter 43.1, ein unteres Zählgatter 43.2, ein oberes Oder-Glied 44.1 und ein unteres Oder-Glied 44.2. Der obere Endkontakt 41 ist mit einem Eingang des oberen Oder-Glieds 44.1, dem oberen Verzögerungsglied 30.1 und einem Eingang des unteren Zählgatters 43.2 verbunden. Der untere Endkontakt 42 ist mit dem anderen Eingang des oberen Oder-Glieds 44.1, einem Eingang des oberen Zählgatters 43.1 und dem unteren Verzögerungsglied 30.2 verdunden. Die Verzögerungsglieder funktionieren wie die bisher beschriebenen. Der Ausgang des oberen Verzögerungsglieds 30.1 steht mit dem anderen Eingang des oberen Zählgatters 43.1 und der Ausgang des unteren Verzögerungsglieds 30.2 mit dem anderen Eingang des unteren Zählgatters 43.2 in Verbindung. Der Ausgang eines jeden Zählgatters 43 ist mit demjenigen seiner Eingänge verbunden, mit dem auch das zugehörige Verzögerungsglied 30 in Verbindung steht. Die beiden Ausgänge der Zählgatter 43 sind weiterhin mit den beiden Eingängen des unteren Oder-Glieds 44.2 verbunden.

Diese Anordnung funktioniert wie folgt. Wird z. B. der Hebeschalter 23.1 aus seiner Mittenstellung zunächst in die obere Endstellung verschoben, wird oder obere Endkontakt 41 mit Spannung versorgt, wodurch auch das obere Verzögerungsglied und der direkte Eingang des unteren Zählgatters 43.2 Spannung erhält. Wird nun der Hebeschalter 23.1 umgeschaltet, fällt die Spannung am unteren Zählgatter 43.2 sofort weg, während sie am oberen über das obere Verzögerungsglied 30.1 während der Verzögerungszeit des Verzögerungsglieds 30.1, also für etwa 0,5 bis 1 Sekunde, stehen bleibt. Wird dann der Hebeschalter 23.1 innerhalb der Verzögerungszeit in seine untere Endstellung verschoben, wird der untere Endkontakt 42 und damit die direkte Leitung zum oberen Zählgatter 43.1 und zum unteren Verzögerungsglied 30.2 mit Spannung versorgt. Das obere Zählgatter 43.1 schaltet daher durch, da an seinem anderen Eingang noch über das Verzögerungsglied 30.1 Spannung anliegt. Das untere Zählgatter 43.2 schaltet dagegen nicht durch, da die spannung an der Direktleitung nach dem Umschalten des Hebeschalters 23.1 sofort weggefallen war. Die Ausgangsspannung am oberen Zählgatter 43.1 bleibt auch erhalten, nachdem bei weiterer Zeitablauf die Spannung vom oberen Verzögerungsglied 30.1 weggefallen ist, da der zum Verzögerungsglied 30.1 zugehörige Eingang des oberen Zählgatters 43.1 mit dem Ausgang des Zählgatters 43.1 über die Selbsthalteleitung 31 verbunden ist. Wäre der Hebeschalter 23.1 statt zunächst nach oben und dann nach unten umgekehrt bewegt worden und in der zweiten Stellung gehalten worden, hätte das untere statt des oberen Zählgatters durchgeschaltet. Wenn vom oberen oder vom unteren Zählgatter eine Spannung kommt, schaltet das untere Oder-Glied 44.2 durch und gibt seine Spannung über ein Hebesperrgatter 32.1 auf ein Hebegatter 25.1. Die Funktion des Hebesperrgatters 32.1 wird noch näher beschrieben werden.

Auch das obere Oder-Glied 44.1 schaltet durch, wenn entweder vom oberen Endkontakt 41 oder vom unteren Endkontakt 42 eine Spannung herkommt. Ein entsprechendes Oder-Glied liegt auch in de Senkzählschaltung 24.2 vor. Der Ausgang des entsprechenden Oder-Glieds der Senkzählschaltung 24.2 ist mit dem anderen Eingang des Hebegatters 25.1 verbunden. Das Hebegatter 25.1 erhält also an seinem einen Eingang Spannung aus der Hebezählschaltung 24.1, wenn der Hebeschalter 23.1 hin- und herbewegt und in seiner zweiten Stellung gehalten ist, und an seinem anderen Eingang eine Spannung, wenn der Senkschalter 23.1 entweder in seine eine Spannung, wenn der Senkschalter 23.1 entweder in seine eine oder in seine andere Stellung bewegt ist. Wenn das Hebegatter 25.1 aber an seinen beiden Eingängen Spannung erhält, schaltet es durch. Es soll nun wiederum vermieden werden, wie dies bereits bei der Schaltung anhand Fig. 5 beschrieben ist, daß nach zweimaligem kurzzeitigem Betätigen des Hebeschalters 23.1 durch zweimaliges kurzzeitiges Betätigen des Senkschalters 23.2 auch Spannung auf das Senkgatter 25.2 gelegt werden kann. Zu diesem Zweck dienen die schon beschriebenen Sperrgatter 32. Das mit dem unteren Oder-Gleid 44.2 in der Hebezählschaltung 24.1 verbundene Hebesperrgatter 32.1 ist mit einem anderen, negierten Eingang mit dem Ausgang des entsprechenden Oder-Gliedes 44.2 in der Senkzählschaltung 24.2 verbunden. Wird also der Senkschalter 23.2 zweimal kurz hintereinander betätigt, erhält der negierte Eingang des Hebesperrgatters 32.1 Spannung, worauf die Spannung an seinem Ausgang abfällt und damit auch das Hebegatter 25.1 keine Spannung mehr erhält. Ein gleichzeitiges Einschelten des Hebegatters 25.1 und des Senkgatters 25.2 ist dadurch ausgeschlossen.

Alle vorliegenden Schaltungen sind nur für einen Bedienablauf beschrieben, bei dem zum Auslösen der Hebebewegung der Hebeschalter zweimal kurz hintereinander zu bedienen ist und der Senkschalter einmal zu bedienen ist. Zum Auslösen der Senkbewegung ist entweder der Senkschalter nur zweimal kurz hintereinander zu bedienen, oder es ist auch noch zusätzlich einmal der Hebeschalter zu bedienen. Es soll hier nochmals betont werden, daß die Schlatungen auf einfache Art und Weise mit noch mehr Zählgliedern versehen werden können, so daß auf einfache Art und Weise beliebige Kombinationen von Reihenfolgen von Bedientakten realisiert sein können, um zugehörige Auslöseschaltungen zum Durchschalten zu bringen.

Wesentlich für alle anmeldungsgemäßen Hubladebühnen ist aber, daß die Auslöseschaltung von nur zwei leicht zugänglichen Bedienorganen angesteuert wird, von denen eines mindestens zweimel zu betätigen ist, bei welchem Betätigen mindestens zwei Bedientakte innerhalb weniger Sekunden nacheinander erfolgen.

Hubladebühnen sind definitionsgemäß Hebebühnen, die an Fahrzeugen angebracht sind. Besonders vorteilhaft werden Hubladebühnen als Ladebordwände an Lastkraftfahrzeugen verwendet. Vor allem bei solchen Anwendungen kommt es häufig vor, daß die Plattform der Hubladebühne nicht nur gehoben und gesenkt werden muß, sondern sie muß auch auf- und abgeneigt werden können, um das freie Ende der Plattform gut auf den Boden aufsetzen zu können, von dem aus ein Ladegut auf die Plattform aufgebracht werden soll. Die vorstehende Anmeldung kann auch völlig äquivalent auf Bedienorgane angewendet werden, die nicht zum Heben und Senken, sondern zum Auslösen der Auf- und Abneigebewegung einer Hubladebühne verwendet werden. Es müßte dann zum Beispiel zum Abneigen der Plattform ein Abneigeorgan zweimal und dann ein Aufneigeorgan einmal betätigt werden. Zum Aufneigen könnte es genügen, nur ein Aufneigeorgan zweimal zu bedienen, da der Aufneigevorgang für eine auf der Plattform stehende Bedienperson weniger gefährlich ist als der Abneigevorgang. Aber auch der Aufneigevorgang könnte erst dadurch ausgelöst werden, daß ein Aufneigeorgan zweimal und ein Abneigeorgan einmal betätigt wird. Generell ist der Anmeldegegenstand immer dann verwendbar, wenn an einer Hubladebühne unter Einhaltung von Sicherheitsvorschriften zwei entgegengesetzte bewegungen auf einfache Art und Weise und mit einem einfachen und übersichtlichen Aufbau durchgeführt werden können.

## Patentansprüche

1. Hubladebühne (11) mit von deren Plattform (12) her leicht zugänglich bedienbaren Bedienorganen (18), zu denen ein Hebeorgan (18.1) und ein Senkorgan (18.2) gehören und mit einer von den Bedienorganen (18) angesteuerten Auslöseschaltung (21), die so beschaffen ist, daß die Hebebewegung der Plattform (12) ausgelöst wird, wenn von unbedienten Bedienorganen (18) ausgehend das Hebeorgan (18.1) bedient wird und die letzte Bedienstellung beibehalten wird und zusätzlich ein anderes Bedienorgan bedient wird, und die so beschaffen ist, daß die Senkbewegung ausgelöst wird, wenn von unbedienten Bedienorganen ausgehend, mindestens das Senkorgan (18.2) bedient wird, dadurch gekennzeichnet, daß nur das Hebeorgan (18.1) und das Senkorgan (18.2) als Bedienorgane vorhanden sind, und daß die Auslöseschaltung (21) so beschaffen ist, daß die Hebebewegung ausgelöst wird, wenn das Hebeorgan mindestens zweimal bedient wird und die letzte Bedienstellung beibehalten wird und das Senkorgan mindestens einmal bedient wird und die letzte Bedienstellung beibehalten wird und mindestens zwei der Bedientakte innerhalb einer bestimmten Zeit nacheinander erfolgen, und daß die Auslöseschaltung weiterhin so beschaffen ist, daß die Senkbewegung ausgelöst wird, wenn das Senkorgan (18.2) mindestens zweimal innerhalb einer bestimmten Zeit bedient wird, und daß das Hebeorgan und das Senkorgan so weit voneinander beabstandet sind, daß sie nicht beide gemeinsam durch einen Fuß einer Bedienperson betätigbar sind.

2. Hubladebühne nach Anspruch 1, dadurch gekennzeichnet, daß die Auslöseschaltung (21) so beschaffen ist, daß die Hebebewegung ausgelöst wird, wenn das Hebeorgan (18.1) zweimal und das Senkorgan (18.2) einmal bedient wird.

3. Hubladebühne nach Anspruch 1 oder 2, dadurch gekennzeichnet, daß die Auslöseschaltung (21) so beschaffen ist, daß die Senkbewegung ausgelöst wird, wenn das Senkorgan (18.2) zweimal und das Hebeorgan (18.1) einmal bedient wird.

4. Hubladebühne nach Anspruch 1 oder 2, dadurch gekennzeichnet, daß die Auslöseschaltung (21) so beschaffen ist, daß die Senkbewegung ausgelöst wird, wenn nur das Senkorgan (18.2) zweimal kurz nacheinander bedient wird.

5. Hubladebühne nach einem der Ansprüche 1 bis 3, dadurch gekennzeichnet, daß die Auslöseschaltung (21) so beschaffen ist, daß eine Bewegung der Plattform (12) unabhängig davon ausgelöst wird, ob zuerst das zweimalige Bedienen an einem Bedienorgan und dann das einmalige Bedienen an dem anderen Bedienorgan oder umgekehrt erfolgt.

6. Hubladebühne nach einem der vorstehenden Ansprüche, dadurch gekennzeichnet, daß jedes Bedienorgan (18) eine Mittenstellung und zwei von dieser unter zueinander entgegengesetzten Bewegungsrichtungen erreichbare Endstellungen aufweist, in denen jeweils ein in der Endstellung betätigter elektrischer Schalter (23) untergebracht ist.

7. Hubladebühne nach Anspruch 6, dadurch gekennzeichnet, daß die Auslöseschaltung so beschaffen ist, daß sie auf das zweimalige Bedienen nur anspricht, wenn dies in zwei entgegengesetzten Bedienrichtungen des jeweiligen Bedienorgans (18) erfolgt.

8. Hubladebühne nach Anspruch 6 oder 7, dadurch gekennzeichnet, daß die Auslöseschaltung so beschaffen ist, daß es für ihr Wirken unbedeutend ist, ob das einmalige Bedienen in der einen oder der anderen Bedienrichtung des jeweiligen Bedienorgans (18) erfolgt.

9. Hubladebühne nach einen der vorstehenden Ansprüche, dadurch gekennzeichnet, daß jeweils eine äquivalente Auslöseschaltung (21) vorliegt, die so beschaffen ist, daß, um dieselben Bewegungen der Plattform (12) auszulösen wie in einem der vorstehenden Ansprüche angegeben, die Anzahlen und Reihenfolgen der Bedientakte von Hebeorgan (18.1) und Senkorgan (18.2) genau vertauscht sind gegenüber den in einem der vorstehenden Ansprüche angegebenen Anzahlen und Reihenfolgen.

## Claims

1. Load-lifting platform (11) with operating means (18) which can be operated in an easily accessible way from the stage (12) of the platform and which include a lifting means (18.1) and a lowering means (18.2), and with a trigger circuit (21) which is controlled by the operating means (18) and is such that the lifting movement of the stage (12) is triggered when, starting from non-operated operating means (18), the lifting means (18.1) is operated and the last operating position is maintained, and in addition another operating means is operated, and which is such that the lowering movement is triggered when, starting from non-operated operating means, at least the lowering means (18.2) is operated, characterised in that only the lifting means (18.1) and the lowering means (18.2) are present as operating means, and in that the trigger circuit (21) is such that the lifting movement is triggered when the lifting means is operated at least twice and the last operating position is maintained, and the lowering means is operated at least once and the last operating position is maintained, and at least two of the operating cycles take place in succession within a specific time, in that, furthermore, the trigger circuit is such that the lowering movement is triggered when the lowering means (18.2) is operated at least twice within a specific time, and in that the lifting means and the lowering means are at such a distance from one another that they cannot both be actuated together by one operator's foot.

2. Load-lifting platform according to Claim 1, characterised in that the trigger circuit (21) is such that the lifting movement is triggered when the lifting means (18.1) is operated twice and the lowering means (18.2) once.

3. Load-lifting platform according to Claim 1 or 2, characterised in that the trigger circuit (21) is such that the lowering movement is triggered when the lowering means (18.2) is operated twice and the lifting means (18.1) once.

4. Load-lifting platform according to Claim 1 or 2, characterised in that the trigger circuit (21) is such that the lowering movement is triggered when only the lowering means (18.2) is operated twice in quick succession.

5. Load-lifting platform according to one of Claims 1 to 3, characterised in that the trigger circuit (21) is such that a movement of the stage (12) is triggered irrespective of whether one operating means is first operated twice and then the other operating means is operated once, or vice versa.

6. Load-lifting platform according to one of the preceding claims, characterised in that each operating means (18) has a middle position and two end positions which can be reached from this in directions of movement opposite one another and in each of which is accommodated an electrical switch (23) actuated in the end position.

7. Load-lifting platform according to Claim 6, characterised in that the trigger circuit is such that it responds to a two-fold operation only when this takes place in two opposite operating directions of the particular operating means (18).

8. Load-lifting platform according to Claim 6 or 7, characterised in that the trigger circuit is such that it is of no importance for its action whether the particular operating means (18) is operated once in one operating direction or the other.

9. Load-lifting platform according to one of the preceding claims, characterised in that in each case there is an equivalent trigger circuit (21) which is such that, to trigger the same movements of the stage (12) as those indicated in one of the preceding claims, the numbers and sequences of the operating cycles of the lifting means (18.1) and lowering means (18.2) are exactly interchanged with respect to the numbers and sequences indicated in one of the preceding claims.

**Revendications**

1. Plate-forme élévatrice de chargement (11) équipée d'organes de commande (18) pouvant être actionnés de façon facilement accessible à partir du plateau (12) de cette plate-forme, organes qui comprennent un organe d'élévation (18.1) et un organe de descente (18.2), et équipé d'un circuit de déclenchement (21) commandé par les organes de commande (18) et qui est réalisé de manière que le mouvement d'élévation du plateau (12) soit déclenché lorsque, en partant de la position non manœuvrée des organes de commande (18), l'organe d'élévation (18.1) est manœuvré et la dernière position de manœuvre est maintenue et que, en supplément, un autre organe de commande est manœuvré, ce circuit étant également réalisé de manière que le mouvement de descente soit déclenché lorsque, en partant de la position non manœuvrée des organes de commande, on manœuvre au moins l'organe de descente (18.2), caractérisée en ce que seuls sont présents comme organes de commande l'organe d'élévation (18.1) et l'organe de descente (18.2) et en ce que le circuit de déclenchement (21) est réalisé de manière que le mouvement d'élévation soit déclenché lorsque l'organe d'élévation est manœuvré au moins deux fois et que la dernière position de manœuvre est maintenue et que l'organe de descente est manœuvré au moins une fois et que la dernière position de manœuvre est maintenue, et au moins deux des actions de manœuvre se produisent l'une après l'autre dans un intervalle de temps déterminé et en ce que le circuit de déclenchement est en outre réalisé de manière que le mouvement de descente soit déclenché lorsque l'organe de descente (18.2) est manœuvré au moins deux fois dans un intervalle de temps déterminé et en ce que l'organe d'élévation et l'organe de descente sont espacés l'un de l'autre suffisamment pour qu'ils ne puissent pas être actionnés tous deux simultanément par le même pied d'un opérateur.

2. Plate-forme élévatrice de chargement selon la revendication 1, caractérisée en ce que le circuit de déclenchement (21) est réalisé de manière que le mouvement d'élévation soit déclenché lorsque l'organe d'élévation (18.1) est manœuvré deux fois et l'organe de descente (18.2) une seule fois.

3. Plate-forme élévatrice de chargement selon la revendication 1 ou 2, caractérisée en ce que le circuit de déclenchement (21) est réalisé de manière que le mouvement de descente soit déclenché lorsque l'organe de descente (18.2) est manœuvré deux fois et que l'organe d'élévation (18.1) est manœuvré une seule fois.

4. Plate-forme élévatrice de chargement selon l'une des revendications 1 et 2, caractérisée en ce que le circuit de déclenchement (21) est réalisé de manière que le mouvement de descente soit déclenché lorsque seul l'organe de descente (18.2) est manœuvré deux fois de suite à bref intervalle.

5. Plate-forme élévatrice de chargement selon l'une des revendications 1 à 3, caractérisée en ce que le circuit de déclenchement (21) est réalisé de manière qu'un mouvement du plateau (12) soit déclenché indépendamment du fait que le double actionnement d'un organe de commande ait lieu tout d'abord et, ensuite, l'actionnement unique de l'autre organe de commande, ou inversement.

6. Plate-forme élévatrice de chargement selon l'une des revendications précédentes, caractérisée en ce que chaque organe de commande (18) présente une position centrale et deux positions extrêmes qui peuvent être atteintes à partir de la première dans des directions de mouvement inverses l'une de l'autre et dans chacune desquelles est placé un commutateur électrique (23) actionné dans la position extrême.

7. Plate-forme élévatrice de chargement selon la revendication 6, caractérisée en ce que le circuit de déclenchement est réalisé de manière qu'il ne réponde à l'actionnement double que lorsque ce dernier a eu lieu dans deux directions de manœuvre inverses de l'organe de commande (18) considéré.

8. Plate-forme élévatrice de chargement selon la revendication 6 ou 7, caractérisée en ce que le circuit de déclenchement est réalisé de manière qu'il soit sans importance pour son action que la manœuvre unique se produise dans l'une ou dans l'autre des directions de manœuvre de l'organe de commande (18) considéré.

9. Plate-forme élévatrice de chargement selon l'une des revendications précédentes, caractérisée en ce qu'il y est prévu un circuit de déclenchement équivalent (21) qui est réalisé de manière que, pour déclencher les mêmes mouvements du plateau (12) que ceux indiqués dans l'une des revendications précédentes, les nombres et ordres de succession des actions d'actionnement de l'organe d'élévation (18.1) et de l'organe de descente (18.2) sont exactement intervertis par rapport aux nombres et ordres de succession indiqués dans l'une des revendications précédentes.

Fig. 1

Fig. 2

Fig. 3

Fig. 4

Fig. 5

Fig. 7

Fig. 8

Fig. 6

Fig. 9

0 080 190

Fig. 10